# EUROPÄISCHE PATENTSCHRIFT

(11) **EP 0 487 889 B1**
(45) Veröffentlichungstag und Bekanntmachung des Hinweises auf die Patenterteilung: **19.10.1994**
(21) Anmeldenummer: 91117714.5
(22) Anmeldetag: 17.10.1991
(51) Int. Cl.: A47J 31/50, A47G 19/14

(54) **Elektrisch betriebenes Gerät zum Zubereiten von Heissgetränken, wie Kaffee, Tee od.dgl., insbesondere Kaffeemaschine**
Electrical apparatus for preparing hot drinks, such as coffee, tea, or the like, in particular a coffee machine
Machine électrique pour faire des boissons chaudes, comme le café, le thé ou des boissons similaires, en particulier une machine à café

(30) Priorität: 30.11.1990 DE 9016307 U
(43) Veröffentlichungstag der Anmeldung: 03.06.1992
(73) Patentinhaber: Robert Krups GmbH & Co. KG, 42719 Solingen (DE)
(72) Erfinder: Mahlich, Gotthard Ch., W-6242 Kronberg/Taunus (DE)
(74) Vertreter: Buse, Karl Georg, Dipl.-Phys.

(56) Entgegenhaltungen:
- EP-A- 0 053 234
- DE-B- 2 658 295
- DE-U- 8 610 515
- FR-A- 2 158 327
- US-A- 2 829 583
- US-A- 4 924 922

## Beschreibung

Die Erfindung bezieht sich auf ein elektrisch betriebenes Gerät zum Zubereiten von Heißgetränken, wie Kaffee, Tee od.dgl., insbesondere auf eine Kaffeemaschine, mit einem Frischwasserbehälter, einer Heizeinrichtung, wie einem Durchlauferhitzer, aus dem das erhitzte Wasser in ein Steigrohr gelangt, dessen Auslauf über einem Filter angeordnet ist, der das Kaffeemehl in einer Filtertüte od.dgl. aufnimmt und unter dem eine Kanne mit einer Schnaupe angeordnet ist, dessen obere Öffnung ein einen Durchlaß aufweisender Kannendeckel verschließt, dem Wärmeverluste des erhitzten Kaffees reduzierende Einrichtungen zugeordnet sind.

Derartige elektrisch betriebene Geräte zum Zubereiten von Heißgetränken, wie Kaffee, Tee od.dgl., insbesondere Kaffeemaschinen, sind in zahlreichen Ausführungsformen bekannt. Bei diesen Kaffeemaschinen besteht das Problem, den in der Kanne befindlichen Kaffee auf Trinktemperatur zu halten. Um dieses zu erreichen, gibt es verschiedene Einrichtungen, die der Kanne direkt oder indirekt zugeordnet sind und die alle den Zweck haben, nach Möglichkeit Wärmeverluste des erhitzten Kaffees zu vermeiden bzw. zu reduzieren.
So ist es beispielsweise bekannt, unterhalb des Bodens der Kanne eine Zusatzheizung anzubringen, die ausschließlich den Zweck hat, die Temperatur des Kaffees in der Kanne auf Trinktemperatur zu erhalten. Zwar kann mit einer solchen Zusatzeinrichtung der gewünschte Zweck erzielt werden, jedoch sind hierzu beachtliche technische Mittel erforderlich.

Ferner hat man den die Öffnung der Kanne verschließenden Kannendeckel so gestaltet, daß er Wärmeverluste des erhitzten Kaffees reduziert. Zu diesen Maßnahmen, die bekannt sind, gehört es beispielsweise, den Durchlaß des kannendeckels zeitweise zu verschließen. Auf diese Weise soll ein Abströmen von Heißdämpfen aus dem Kanneninneren durch den Durchlaß hindurch vermieden werden. Zum Versperren des Durchlasses benutzt man entweder einen Kaffeetropfen oder auch einen Wasserkondenstropfen. Diese Sperrmittel sind in aller Regel nur dann anzuwenden, wenn die Querschnittsfläche des Durchlasses einen bestimmten Wert nicht überschreitet. Ansonsten kommt es nicht zur Bildung eines den Durchlaß verschließenden Tropfens.

Andere Maßnahmen sehen vor, die Öffnung der Schnaupe der Kanne ganz oder teilweise zu verschließen. So ist es beispielsweise bekannt, an den Begrenzungswandungen der Schnaupe einen Klappdeckel zu lagern, der beim Schrägstellen der Kanne die Schnaupenöffnung freigibt, in der horizontalen Lage der Kanne dagegen unter der einwirkung der Scherkraft auf den Randteilen der Schnaupe liegt und die Öffnung dadurch mindestens teilweise verschließt. Auf diese Weise soll ein Abstr men von Heißdämpfen durch die Schnaupenöffnung der Kanne vermieden werden. Eine solche Lösung hat den Nachteil, daß im Bereich der Begrenzungswandungen der Schnaupe Lagerstellen für die Lagerachse des Klappdeckels geschaffen werden müssen.

Die Erfindung will ebenfalls einen Weg vorschlagen, wie Wärmeverluste des in der Kanne befindlichen Kaffees reduziert werden können. Sie will insbesondere einen Kannendeckel schaffen, der die gesamte obere Öffnung der Kanne gegen Wärmeverluste gesichert abdeckt. Dies bedeutet, daß der Kannendeckel zugleich so ausgebildet sein soll, daß auch die Öffnung der Schnaupe mit in den Schutz gegen Wärmeverluste einzubeziehen ist.

Gelöst wird diese Aufgabe bei einem elektrisch betriebenen Gerät zum Zubereiten von Heißgetränken, wie Kaffee, Tee od.dgl. der eingangs genannten Art durch die Kombination folgender Merkmale:
a) der Kannendeckel besteht aus einem Ober- und einem Unterteil, die einen mit Isoliermaterial gefüllten Zwischenraum zwischen sich einschließen;
b) Ober- und Unterteil des Kannendeckels haben jeweils einen Durchbruch für den Durchtritt des aus dem Filter der Kaffeemaschine abströmenden Kaffees;
c) dem Durchbruch des Unterteiles des Kannendeckels ist eine Durchlaßsperre vor- bzw. zugeschaltet;
d) der Kannendeckel hat eine die Öffnung der Schnaupe der Kanne wenigstens bereichsweise verschließende Schnaupenabdeckung.

Durch die erfindungsgemäße Ausbildung des Kannendeckels einer Kanne einer elektrisch betriebenen Kaffeemaschine ergibt sich der große Vorteil, daß nicht nur durch ihn die große obere Öffnung der Kanne abgedeckt und gegen Wärmeverluste weitgehend gesichert ist, sondern es wird dabei auch der Durchlaß des Kannendeckels für den Einlauf des kaffees in die Kanne und darüber hinaus auch die Schnaupe, die zum Ausgießen des erhitzten Kaffees dient, erfaßt. Alle diese Maßnahmen wirken unmittelbar nach Aufsetzen des erfindungsgemäß ausgebildeten Kannendeckels.

Nach einem ersten Vorschlag der Erfindung ist vorgesehen, den Oberteil des Kannendeckels geneigt zur Horizontalen verlaufen zu lassen und an seiner tiefsten Stelle mittig liegend einen Durchbruch vorzusehen, dem ein im Querschnitt kleinerer mittlerer Durchbruch des Unterteiles nachgeschaltet ist, dem eine als Verschlußklappe ausgebildete Durchlaßsperre zugeordnet ist.

Bei einer solchen Ausführungsform ist es zweckmäßig, den Unterteil des Kannendeckels einen vorzugsweise angeformten Lagervorsprung aufweisen zu lassen, der eine Lagerachse für die als Doppelhebel ausgebildete Verschlußklappe trägt.

Ein solcher Doppelhebel hat zweckmäßig unterschiedlich lange Hebelarme, von denen der kürzere dem Durchbruch des Unterteiles des Kannendeckels zugeordnet ist. Bei einer solchen Ausgestaltung des Kannendeckels gibt dessen Doppelhebel bei Auftreten von Flüssigkeit den Durchbruch frei. Durch die gewählte Ausbildung des Doppelhebels geht er nach Abfließen der Flüssigkeit durch Schwerkraft in seine Ruhelage zurück, in der er den Durchbruch des Unterteiles des Kannendeckels verschließt.

Nach einem anderen Vorschlag der Erfindung ist der mittlere Durchbruch des Unterteiles des Kannendeckels durch einen wärmesensitiven Hebel aus Memorymetall oder Bimetall verschließbar. Bei dieser Ausführungsform der Erfindung wird beim Auftreffen von heißer Flüssigkeit auf einen Teilbereich des wärmesensitiven Hebels dieser bewegt, derart, daß die Öffnung freigegeben wird. Sobald der Einfluß der heißen Flüssigkeit auf den wärmesensitiven Hebel aufhört, kehrt dieser wieder in seine Schließlage zurück.

Dabei emfpiehlt es sich, den wärmesensitiven Hebel mit seinem rückwärtigen Lagerende in eine Querbohrung eines Lagervorsprunges des Unterteiles des Kannendeckels eingreifen zu lassen. Der Lagervorsprung wird dabei aus wirtschaftlichen Gründen zweckmäßig dem Unterteil des Kannendeckels unmittelbar angeformt.

Bei den bisher angegebenen Ausführungsformen des erfindungsgemäßen Kannendeckels erfolgt der Einlaß des hergestellten Kaffees in die Kanne durch einen mittigen Auslaß. In Abwandlung dieser Ausführungsformen wird vorgeschlagen, das Einführen des fertigen Kaffees in die Kanne nicht im Bereich der Mitte des Kannendeckels durchzuführen sondern im Bereich der Schnaupe. Bei einer solchen Ausgestaltung der Kaffeemaschine ist der Einlaß des Oberteiles des Kannendeckels an seinem der Kanne der Kaffeemaschine zugekehrten Seite durch einen Sperrbereich des Unterteiles abgeschlossen. Dem Einlaß ist stattdessen ein quer zu ihm angeordneter Kanal nachgeschaltet, dessen von einer Schnaupenabdeckung überdeckter Auslaß oberhalb der Öffnung der Schnaupe der Kanne liegt. Bei dieser Ausführungsform erfolgt gewissermaßen ein Umlenken des aus dem Filter kommenden Kaffees. Dieser wird um 9o° nach seinem Austreten umgelenkt und zwar einfach dadurch, daß er in dem entsprechend angeordneten Kanal bis zur Schnaupe geführt wird.

Bei der Ausgestaltung dieses Ausführungsbeispieles ist es auch möglich, den Kanal des Kannendeckels auf einer der Kanne der Kaffeemaschine abgewandten Seite offenzuhalten. Nach einem abgewandelten Ausführungsbeispiel der Erfindung kann der Kanal, der zum Umlenken des Kaffees dient, nach oben hin durch eine Decke verschlossen sein, die in die Schnaupenabdeckung ausläuft.

Nach einem anderen Vorschlag der Erfindung weist der Oberteil des Kannendeckels einen Einlaufraum für den aus dem Filter strömenden Kaffee auf, der zur Unterbringung eines ortsveränderlichen Schwimmers dient, der in seiner einen Endlage einen Durchlaß des Unterteiles des Kannendeckels verschließt. Bei dieser Ausführungsform des Kannendeckels ist der Durchlaß zunächst durch den Schwimmer versperrt. Erst dann, wenn der Kaffee in den Einlaufraum des Kannendeckels einlauft, erfolgt ein Aufschwimmen des Schwimmers durch den Kaffee. Durch diese Bewegung des Schwimmers wird der Durchlaß freigegeben, so daß der Kaffee - wie gewollt - in die Kanne abfließen kann.

Bei dieser Ausführungsform der Erfindung empfiehlt es sich, den Schwimmer aus einem im Einlaufraum befindlichen Oberteil und einem unterhalb des Durchlasses des Kannenunterteiles liegenden Unterteil bestehen zu lassen. Die beiden Teile sind durch einen den Durchlaß durchgreifenden Verbindungssteg miteinander verbunden. Dabei überragt der Durchmesser des Oberteiles und der des Unterteiles des Schwimmers den des Durchlasses, so daß ein vollständiges Entfernen des Schwimmers nicht möglich ist.

Nach einem anderen Vorschlag der Erfindung ist der Schwimmer als Schwimmkugel ausgebildet. In diesem Falle empfiehlt es sich, die Schwimmkugel in einem Käfig unterzubringen, der durch eine Flüssigkeit durchlassende Abdeckung von dem Einlaufraum des Kannendeckels abgetrennt ist. In diesem Falle empfiehlt es sich, die Abdeckung des Käfigs aus einem Mittelstück bestehen zu lassen, von dem unter Freilassung von Durchtrittsöffnungen für die Flüssigkeit Stege ausgehen, deren freie Enden an der Begrenzungswand des Einlaufraumes festgelegt sind.

In den Figuren der Zeichnungen ist die Erfindung in mehreren Ausführungsbeispielen dargestellt und zwar zeigen:
- Fig. 1: ein elektrisch betriebenes Gerät zum Zubereiten von Heißgetränken, wie Kaffee, Tee od.dgl. in Form einer Kaffeemaschine in Seitenansicht, wobei diese Kaffeemaschine eine Kanne aufweist, deren obere Öffnung und Schnaupenöffnung durch einen erfindungsgemäß ausgebildeten Kannendeckel verschlossen ist,
- Fig. 2: im vergrößerten Maßstab und im Schnitt eine zweite Ausführungsform des erfindungsgemäßen Kannendeckels, wobei sich die Durchlaßsperre des Durchbruches in der Schließlage befindet,
- Fig. 3: ebenfalls im Längsschnitt und vergrößertem Maßstab die Ausführungsform des Kannendeckels nach der Fig. 2, wobei jedoch die Durchlaßsperre abgewandelt ist, dabei ist die Durchlaßsperre in ausgezogenen Linien in ihrer Sperrlage und in strichpunktierten Linien in ihrer Öffnungslage wiedergegeben,
- Fig. 4: in vergrößertem Maßstab und im Längsschnitt eine dritte Ausführungsform des erfindungsgemäßen Kaffeekannendeckels zur Anwendung bei der kanne der Kaffeemaschine nach der Fig. 1 der Zeichnung,
- Fig. 5: im vergrößerten Maßstab und im Längssschnitt die Ausführungsform des Kannendeckels nach der Fig. 4, jedoch in etwas abgewandelter Gestalt hinsichtlich der Ausbildung des Abflußkanals der Flüssigkeit,
- Fig. 6: in Seitenansicht, teilweise weggebrochen, den oberen Bereich der Kanne der Kaffeemaschine nach der Fig. 1 mit einer vierten Ausführungsform des Kannendeckels vor dessen Anbringen auf der oberen Begrenzungskante der Kanne, wobei die Durchlaßsperre in ihrer Offenlage wiedergegeben ist,
- Fig. 7: im vergrößerten Maßstab und im Längsschnitt die vierte Ausführungsform des Kannendeckels gemäß der Fig. 6 der Zeichnung, wobei jedoch die Durchlaßsperre nunmehr als Schwimmkugel ausgebildet ist, die sich in ihrer wirksamen Lage, also Sperrlage befindet und
- Fig. 8: in Draufsicht, teilweise weggebrochen, einen Teilbereich des Kannendeckels gemäß der Fig. 7 der Zeichnung.

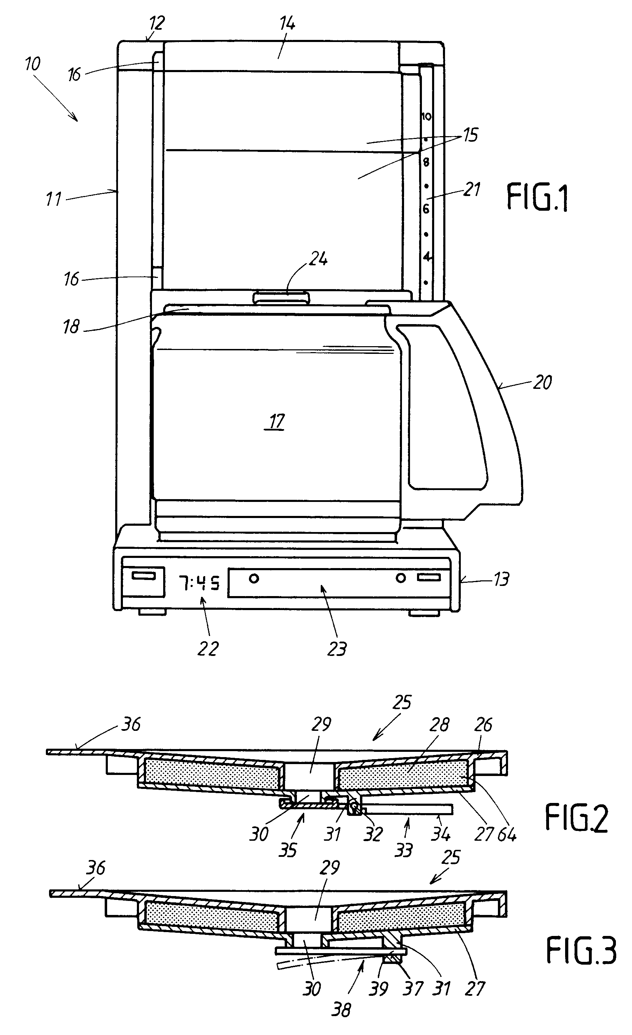

Es sei zunächst erwähnt, daß das dem Ausführungsbeispiel nach der Fig. 1 der Zeichnung zugrundegelegte Gerät zum Zubereiten von Heißgetränken, wie Kaffee, Tee od.dgl. nur stellvertretend für derartige Geräte steht. Die Ausbildung dieses Gerätes selbst spielt für die Erfindung keine entscheidende Rolle. Wesentlich ist die Gestaltung des Kannendeckels und der dazugehörigen Teile. Daher ist auf die zeichnerische Darstellung von vielen Teilen der Kaffeemaschine weitgehend verzichtet worden.

Alle in der Fig. 1 der Zeichnung fehlenden Teile können grundsätzlich eine bekannte Ausführung haben und in ebenfalls an sich bekannter Weise in oder an der Kaffeemaschine angeordnet sein.

Das der Fig. 1 der Zeichnung zugrundegelegte, elektrisch betrieber Gerät zum Zubereiten von Heißgetränken, wie Kaffee, Tee od.dgl. - nachstehend kurz Kaffeemaschine genannt - ist mit 10 bezeichnet. Es handelt sich dabei um eine solche Kaffeemaschine, die mit einem Frischwasserbehälter und einer Heizeinrichtung, z.B. einem Durchlauferhitzer, versehen ist. Aus diesem Durchlauferhitzer gelangt das erhitzte Wasser in ein Steigrohr, dessen Auslauf oberhalb eines Filters angeordnet ist, der das Kaffeemehl in einer Filtertüte oder auch in einem Dauerfilter aufnimmt. Unter dem Filter ist eine Kanne mit Schnaupe angeordnet. Die obere Öffnung der Kanne ist durch einen abnehmbaren Kannendeckel verschließbar. Dabei sind dem Kannendeckel Wärmeverluste des erhitzten Kaffees reduzierende Einrichtungen zugeordnet.

Gemäß der Fig. 1 der Zeichnung hat die mit 10 bezeichnete Kaffeemaschine ein aufrechtes Gehäuse 11, welches nach oben hin durch eine Abdeckung 12 verschlossen ist. Im unteren Bereich hat die Kaffeemaschine 10 einen Aufstellfuß 13, der das Aufstellen der Kaffeemaschine 10 auf einer ebenen Fläche, beispielsweise auf einem Küchentisch zuläßt. Im oberen Bereich hat die Kaffeemaschine 10 einen vorkragenden Gehäuseausleger 14. Darunter befindet sich ein zweiteiliger Schwenkfilter 15, in dem in bekannter Weise eine das Kaffeemehl aufnehmende Filtertüte oder aber auch ein an sich bekannter Dauerfilter angeordnet ist. Zur Ermöglichung des Verschwenkens des zweiteiligen Schwenkfilters 15 sind Lager 16 am Gehäuse 11 vorgesehen. Darüber hinaus ist im oberen Gehäuseteil gut sichtbar für den Beschauer eine Wasserstandsanzeige 21 angeordnet, die den Frischwasserstand des Frischwasserbehälters der Kaffeemaschine 10 anzeigt. Der zweiteilige Schwenkfilter 15 hat in bekannter Weise einen gegebenenfalls mit einer Tropfsicherung ausgerüsteten Auslaß, durch den der fertige Kaffee in die generell mit 17 bezeichnete Kanne gelangt, die unterhalb des Auslaufes des zweiteiligen Schwenkfilters 15 angeordnet ist und die auf einer dafür vorgesehenen Fläche des Aufstellfußes 13 ruht.

Dem Aufstellfuß 13 ist ein generell mit 23 bezeichnetes Schalt- und Steuerfeld zugeordnet. In diesem Schalt- und Steuerfeld 23 ist z.B. ein Ein- und Ausschalter vorgesehen, der auch so beschaffen sein kann, daß eine automatische Endabschaltung nach zwei Stunden Betriebsdauer erfolgt. Darüber hinaus ist in dem Schalt- und Steuerfeld 23 ein Umschalter für eine sogenannte Aromaverstärkung vorgesehen. Die Inbetriebnahme eines solchen Umschalters erfolgt dann, wenn mit der Kaffeemaschine 10 nur ein bis drei Tassen Kaffee hergestellt werden sollen. Im Bereich dieses Schalt- und Steuerfeldes 23 sind ferner Einstellmittel vorgesehen, die zum Einstellen der mit 22 bezeichneten Digitaluhr dienen. Und schließlich ist seitlich neben der Digitaluhr noch eine weitere Einstelleinrichtung für eine Automatik vorgesehen, die nicht näher bezeichnet ist. Wird diese betätigt, dann kann eine vollautomatische Kaffeezubereitung erfolgen, wobei die Einstellung dieser Einrichtung bis zu 24 Stunden im voraus programmierbar ist.

Die mit 17 bezeichnete Kanne ist im gewählten Ausführungsbeispiel ein Glaskrug. Die Querschnittsgestaltung der Kanne ist im wesentlichen kreisförmig. An der Umfangsfläche der Kanne 17 befindet sich ein Handgriff 20, der den Transport bzw. das Aufstellen und Entnehmen der Kanne 17 vom Aufstellfuß erleichtern soll. Der Handgriff 20 ist im dargestellten Ausführungsbeispiel mit Hilfe eines nicht näher bezeichneten Spannbandes im unteren Teil der Umfangsfläche der Kanne 17 befestigt und zwar in unmittelbarer Nähe des Bodens der Kanne 17. Dem Handgriff 20 gegenüberliegend hat die Kanne 17 eine Schnaupe 19, die dem gezielten Ausgießen des Kaffees aus der Kanne 17 dient.

Dem Boden der Kanne gegenüberliegend hat diese eine nicht näher bezeichnete Öffnung, die jedoch beim bestimmungsgemäßen Gebrauch der Kaffeemaschine 10 durch einen Kannendeckel verschlossen ist. Eine erste Ausführungsform eines solchen Kannendeckels ist in der Fig. 1 dargestellt.

Die Fig. 2 und 3 zeigen demgegenüber jeweils im Längsschnitt eine weitere Ausführungsform eines mit 25 bezeichneten Kannendeckels. Die Fig. 2 und 3 lassen dabei erkennen, daß dieser Kannendeckel 25 aus einem Oberteil 26 und einem Unterteil 27 besteht, die einen mit Isoliermaterial 28 gefüllten Zwischenraum 64 zwischen sich einschließen. Als Isoliermaterial kommen bekannte, in der einschlägigen Industrie benutzte Werkstoffe in Betracht.

Ober- und Unterteil 26 bzw. 27 des Kannendeckels 25 haben jeweils einen Durchbruch 29 bzw. 30 für den Durchtritt des aus dem Filter 15 der kaffeemaschine 10 abströmenden Kaffees. Den Durchbruch 30 ist - wie die Fig. 2 und 3 der Zeichnung erkennen läßt - gegenüber dem darüberliegenden weiteren Durchbruch 29 durchmessermäßig wesentlich kleiner gehalten. Der obere Durchbruch 29 dient dabei als Einlaufraum bzw. auch als Sammelraum für den aus dem Filter 15 kommenden Kaffee.

Dem jeweils unteren Durchbruch 30 des Unterteiles 27 ist eine Durchlaßsperre vor- bzw. zugeschaltet. Diese Durchlaufsperre ist unterschiedlich gestaltet.

Der Oberteil des Kannendeckels 25 verläuft geneigt zur Norizontalen und hat an seiner tiefsten, mittig liegenden Stelle den schon erwähnten Durchbruch 29, dem der im Querschnitt kleinere mittlere Durchbruch 30 des Unterteiles 27 nachgeschaltet ist. Diesem Durchbruch 30 ist im Ausführungsbeispiel des Kannendeckels 25 nach der Fig. 2 der Zeichnung eine als Verschlußklappe 33 ausgebildete Durchlaßsperre zugeordnet.

Dabei empfiehlt es sich, daß der Unterteil 27 des Kannendeckels 25 einen vorzugsweise angeformten Lagervorsprung 31 aufweist, der eine Lagerachse 32 für die als Doppelhebel ausgebildete Verschlußklappe 33 trägt.

Zweckmäßig weist der Doppelhebel 33 unterschiedlich lange Hebelarme 34, 35 auf, von denen der kürzere 35 dem Durchbruch 30 des Unterteiles 27 des Kannendeckels 25 zugeordnet ist. Durch die gewählte Ausbildung und Anordnung des Doppelhebels 33 wird der Durchbruch 30 verschlossen, so wie dies in der Fig. 2 der Zeichnung wiedergegeben ist. Beim Auftreffen von Flüssigkeit auf den kürzeren Hebelarm 35 des Doppelhebels 33 erfolgt ein Verschwenken des Doppelhebels 33 um die Lagerachse 32 mit dem Erfolg, daß der Durchbruch 30 freigegeben wird. Der Kaffee kann in die Kanne 17 abströmen. Ist der gesamte Kaffee aus dem Filter 15 abgelaufen, dann kehrt der Doppelhebel 33 durch Schwerkrafteinwirkung in seine in der Fig. 2 dargestellte Ruhelage zurück.

In der Fig. 3 der Zeichnung ist eine andere Verschlußeinrichtung gewählt. In diesem Falle ist der mittlere Durchbruch 30 des Unterteiles 27 des Kannendeckels 25 durch einen wärmesensitiven Hebel 38 aus Memory-Metall oder Bimetall verschließbar. Dieser wärmesensitive Hebel 38 greift mit seinem rückwärtigen Lagerende 39 in eine Querbohrung 37 eines Lagervorsprunges 31 des Unterteiles 27 des Kannendeckels 25 ein. Der Lagervorsprung 31 ist dabei wiederum dem Unterteil unmittelbar angeformt. In der Fig. 3 der Zeichnung ist der wärmesensitive Hebel 38 sowohl in seiner Schließ- als auch in seiner Offenlage wiedergegeben. Die Schließlage wird durch geschlossene Linien und die Öffnungslage durch strichpunktierte Linien des wärmesensitiven Hebels 38 wiedergegeben. Der Durchbruch 30 wird somit zunächst durch den wärmesensitiven Hebel 38 aus Memorymetall oder Bimetall verschlossen. Beim Auftreffen von heißer Flüssigkeit wird die Öffnung des Durchbruches freigegeben. Es kann ein Abströmen des Kaffees aus dem Filter 15 in die Kanne 17 erfolgen. Sobald der wärmesensitive Hebel 38 abkühlt - was bei fehlendem heißen Kaffee der Fall ist - kehrt er wieder in seine in ausgezogenen Linien dargestellte Sperrlage nach der Fig. 3 der Zeichnung zurück.

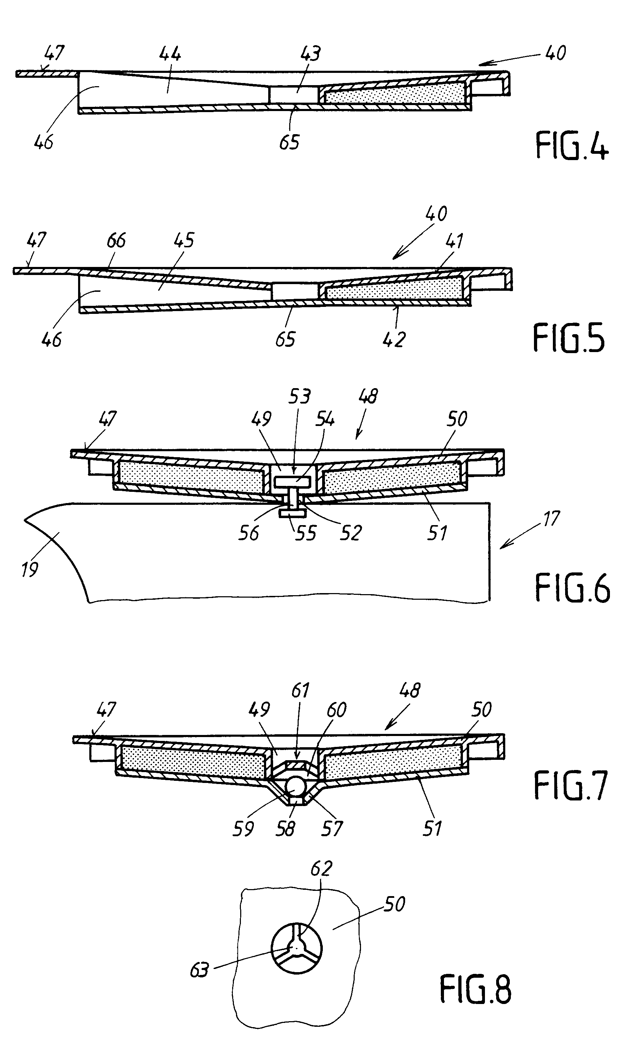

Bei der Ausführungsform des Kannendeckels 25 nach den Fig. 2 und 3 der Zeichnung erfolgt das Durchströmen des Kaffees im mittleren Bereich des Kannendeckels und zwar durch die jeweils mittig angeordneten Durchbrüche 29 bzw. 30 des Oberteiles bzw. des Unterteiles 26 bzw. 27 des Kannendeckels 25. In den Fig. 4 und 5 ist dagegen von einem solchen mittigen Ablaufen des Kaffees Abstand genommen. Vielmehr erfolgt in diesem Falle eine Umlenkung des aus dem Auslaß des Filters kommenden Kaffees und zwar um etwa 90°. Um eine solche Umlenkung zu ermöglichen, hat der jetzt mit 43 bezeichnete Einlaß des Oberteiles 41 der weiteren Ausführungsform des Kannendeckels 40 an seiner der Kanne 17 der Kaffeemaschine 10 zugekehrten Seite einen Sperrbereich 65, d.h. der Einlaß 43 ist in Richtung Kanne 17 durch den Sperrbereich 65 abgeschlossen. Stattdessen ist dem Einlaß 43 ein quer zu ihm angeordneter Kanal 44 bzw. 45 nachgeschaltet.

Der Auslaß 46 dieses Kanals liegt oberhalb der Öffnung der Schnaupe 19 der Kanne 17. Dabei ist ferner vorgesehen, daß eine Schnaupenabdeckung 47 die Öffnung der Schnaupe 19 weitgehend überdeckt. Die Schnaupenabdeckung 47 ist dabei ein angeformter Bestandteil des Kannendeckels 40. Bei der Ausführungsform des Kannendeckels 40 nach der Fig. 4 ist der Kanal 44 auf seiner der Kanne 17 der Kaffeemaschine 10 abgewandten Seite offen. Demgegenüber ist der Kanal 45 des Kannendeckels 40 gemäß der Fig. 5 der Zeichnung nach oben hin durch eine Decke 66 verschlossen, die in die Schnaupenabdeckung 47 ausläuft. Dadurch, daß der aus dem Filter 15 kommende Kaffee über den Kanal 44 bzw. 45 und die Auslauföffnung 46 in den Bereich der nach oben hin offenen Öffnung der Schnaupe 19 gelangt, wird zumindest während des Ausgießens des Kaffees aus der Auslaßöffnung 46 ein Abströmen von Heißdampf aus dem Inneren der Kanne 17 durch die Schnaupenöffnung vermieden.

In den Fig. 6 bis 8 der Zeichnung ist eine weitere Ausführungsform des Kannendeckels wiedergegeben, die nunmehr mit 48 bezeichnet ist. Die Fig. 6 und 7 zeigen dabei, daß es sich wiederum um eine doppelwandige und mit Isoliermaterial bestückte Ausführungsform des Kannendeckels handelt. Der Oberteil des Kannendeckels 48 ist mit 50, der Unterteil mit 51 bezeichnet. Da diese beiden Teile mit erheblichen Abstand voneinander liegen, entsteht ein Zwischenraum, der mit Isoliermaterial gefüllt ist.

Der Oberteil 50 des Kannendeckels 48 weist einen Einlaufraum 49 für den aus dem Filter 15 strömenden Kaffee auf. Dieser Einlaufraum 49 dient zur Unterbringung eines ortsveränderlichen Schwimmers 53 (Fig. 6). Dieser Schwimmer verschließt in seiner einen Endlage den Durchlaß 52 des Unterteiles des Kannendeckels 48. Die Fig. 6 zeigt jedoch den Schwimmer 53 in seiner Offenstellung.

Der Schwimmer 53 besteht aus einem im Einlaufraum 49 befindlichen Oberteil 54 und einem unterhalb des Durchlasses 52 des Kannendeckelunterteiles 51 liegenden Unterteil 55. Die beiden Teile sind durch einen den Durchlaß 52 durchgreifenden Verbindungssteg 56 miteinander verbunden. Der Schwimmer 53 ist im übrigen einstückig hergestellt. Der Durchlaß 52 wird dadurch freigegeben, daß der Schwimmer beim Einlaufen von Kaffee in denh Einlaufraum aufschwimmt. Dadurch entfernt sich der Oberteil 54 des Schwimmers 53 von dem Durchlaß. Nach Abströmen der Flüssigkeit kehrt der Schwimmer 53 unter dem Einfluß der Schwerkraft in seine Ruhelage zurück.

In Abwandlung der Ausführungsform nach der Fig. 6 der Zeichnung ist gemäß Fig. 7 der Schwimmer nunmehr als Schwimmkugel 59 ausgebildet. Diese Schwimmkugel 59 liegt gemäß der Fig. 7 in ihrer Verschlußlage, in der sie den Durchlaß 58 des Unterteiles 51 des Kannendeckels 48 verschließt. Die Schwimmerkugel 59 ist in einem Käfig 60 untergebracht, der durch eine eine Flüssigkeit durchlassende Abdeckung 61 von dem Einlaufraum 49 des Kannendeckels 48 abgetrennt ist.

Bei der dargestellten Ausführungsform der Erfindung besteht die Abdeckung 61 des Käfigs 60 aus einem Mittelstück 63, von dem unter Freilassung von Durchtrittsöffnungen für die Flüssigkeit Stege 62 ausgehen, deren freie Enden an der Begrenzungswand des Einlaufraumes 49 festgelegt sind. Die Festlegung der Abdeckung kann mit bekannten Mitteln, beispielsweise durch Kleben erfolgen, wobei das Festlegen selbstverständlich erst dann erfolgt, wenn die Schwimmkugel 59 in den Käfig 60 eingebracht ist.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. Dies gilt insbesondere für die Ausbildung und Gestaltung der Durchlaßsperre für den Durchlaß des jeweiligen Kannendeckels. Und schließlich ist es auch möglich, die Erfindung bei anderen als dem in der Fig. 1 dargestellten elektrisch betriebenem Gerät zum Herstellen von Heißgetränken zu benutzen.

### Bezugszeichenliste :

- 10: - Kaffeemaschine
- 11: - Gehäuse (von 10)
- 12: - Abdeckung (von 11)
- 13: - Aufstellfuß (von 10)
- 14: - Gehäuseausleger
- 15: - zweiteiliger Schwenkfilter
- 16: - Lager (für 15)
- 17: - Kanne (Auffangbehälter)
- 18: - Kannendeckel (I. Ausführungsform)
- 19: - Schnaupe (von 17)
- 20: - Handgriff (von 17)
- 21: - Wasserstandsanzeige
- 22: - Digitaluhr
- 23: - Schalt- und Steuerfeld
- 24: - Auslaß (von 15)
- 25: - Kannendeckel (II. Ausführungsform) - Fig. 2 und 3
- 26: - Oberteil (von 25)
- 27: - Unterteil (von 25)
- 28: - Isoliermaterial
- 29: - mittlerer Durchbruch (von 26)
- 30: - mittlerer Durchbruch (von 27)
- 31: - Lagervorsprung (an 27)
- 32: - Lagerachse
- 33: - Verschlußkappe (für 30)
- 34: - längerer Hebelarm (von 33)
- 35: - kürzerer Hebelarm (von 33)
- 36: - Schanupenabdeckung (an 26)
- 37: - Querbohrung (in 31)
- 38: - Memory- bzw. Bimetallkörper
- 39: - Lagerende (von 38)
- 40: - Kannendeckel (III. Ausführung) - Fig. 4 und 5
- 41: - Oberteil (von 40)
- 42: - Unterteil (von 40)
- 43: - Einlaß (in 41)
- 44: - Kanal (in 41) - Fig. 4
- 45: - Kanal (in 41) - Fig. 5
- 46: - Auslaß (von 44 bzw. 45)
- 47: - Schnaupenabdeckung
- 48: - Kannendeckel (IV. Ausführung) - Fig. 6 und 7
- 49: - Einlaufraum (in 50)
- 50: - Oberteil (von 48)
- 51: - Unterteil (von 48)
- 52: - Durchlaß (in 51)
- 53: - Schwimmer
- 54: - Schwimmeroberteil
- 55: - Schwimmerunterteil
- 56: - Verbindungssteg (zwischen 54 und 55)
- 57: - vertiefter Bereich (von 51)
- 58: - Durchlaß (in 57)
- 59: - Schwimmerkugel
- 60: - Aufnahmeraum = Käfig (für 59)
- 61: - Abdeckung (von 60)
- 62: - Stege (von 61)
- 63: - Mittelstück (von 61)
- 64: - Zwischenraum
- 65: - Sperrbereich (von 42)
- 66: - Decke (von 45)

## Patentansprüche

1. Elektrisch betriebenes Gerät zum Zubereiten von Heißgetränken, wie Kaffee, Tee od.dgl., insbesondere Kaffeemaschine, mit einem Frischwasserbehälter, einer Heizeinrichtung - wie einem Durchlauferhitzer - aus dem das erhitzte Wasser in ein Steigrohr gelangt, dessen Auslauf über einem Filter angeordnet ist, der das Kaffeemehl in einer Filtertüte od.dgl. aufnimmt und unter dem eine Kanne mit einer Schnaupe angeordnet ist, dessen obere Öffnung ein einen Durchlaß aufweisender Kannendeckel verschließt, dem Wärmeverluste des erhitzten Kaffees reduzierende Einrichtungen zugeordnet sind,
**gekennzeichnet** durch die Kombination folgender Merkmale:
a) der Kannendeckel (18, 25, 40, 48) besteht aus einem Ober- und einem Unterteil (26, 27, 41, 42, 50, 51), die einen mit Isoliermaterial (28) gefüllten Zwischenraum (64) zwischen sich einschließen,
b) Ober- und Unterteil (26, 27, 41, 42, 50, 51) des Kannendeckels (18, 25, 40, 48) haben jeweils einen Durchbruch (29, 30, 43, 46, 49, 52, 53, 58) für den Durchtritt des aus dem Filter (15) der Kaffeemaschine (10) abströmenden Kaffees;
c) dem Durchbruch (30, 46, 52, 58) des Unterteiles (27, 42, 51) des Kannendeckels (26, 27, 41, 42, 50, 51) ist eine Durchlaßsperre (35, 38) vor- bzw. zugeschaltet,
d) der Kannendeckel (26, 27, 41, 42, 50, 51) hat eine die Öffnung der Schnaupe (19) der Kanne (17) wenigstens bereichsweise verschließende Schnaupenabdeckung (36, 47).

2. Kaffeemaschine nach Anspruch 1, dadurch gekennzeichnet, daß der Oberteil (26) des Kannendeckels (25) geneigt zur Horizontalen verläuft und an seiner tiefsten mittig liegenden Stelle einen Durchbruch (29) aufweist, dem ein im Querschnitt kleinerer, mittlerer Durchbruch (30) des Unterteiles (27) nachgeschaltet ist, dem eine als Verschlußklappe (33) ausgebildete Durchlaßsperre zugeordnet ist (Fig. 2).

3. Kaffeemaschine nach Anspruch 1 und 2, dadurch gekennzeichnet, daß der Unterteil /27) des Kannendeckels (25) einen vorzugsweise angeformten Lagervorsprung (31) aufweist, der eine Lagerachse (32) für die als Doppelhebel ausgebildete Verschlußklappe (33) trägt (Fig. 2).

4. Kaffeemaschine nach Anspruch 3, dadurch gekennzeichnet, daß der Doppelhebel (33) unterschiedlich lange Hebelarme (34, 35) aufweist, von denen der kürzere (35) dem Durchbruch (30) des Unterteiles (27) des Kannendeckels (25) zugeordnet ist (Fig. 2).

5. Kaffeemaschine nach Anspruch 1 und 2, dadurch gekennzeichnet, daß der mittlere Durchbruch (30) des Unterteiles (27) des Kannendeckels (25) durch einen wärmesensitiven Hebel (38) aus Memorymetall oder Bimetall verschließbar ist (Fig. 3).

6. Kaffeemaschine nach Anspruch 5, dadurch gekennzeichnet, daß der wärmesensitive Hebel (38) mit seinem rückwärtigen Lagerende (39) in eine Querbohrung (37) eines Lagervorsprunges (31) des Unterteiles (27) des Kannendeckels (25) eingreift (Fig. 3).

7. Kaffeemaschine nach Anspruch 1, dadurch gekennzeichnet, daß der Einlaß (43) des Oberteiles (41) des Kannendeckels (40) an seinem der Kanne (17) der Kaffeemaschine (10) zugekehrten Seite durch einen Sperrbereich (65) des Unterteiles (42) abgeschlossen ist und daß dem Einlaß (43) ein quer zu ihm angeordneter Kanal (44, 45) nachgeschaltet ist, dessen von einer Schnaupenabdeckung (47) überdeckter Auslaß (46) oberhalb der Öffnung der Schnaupe (19) der Kanne (17) liegt (Fig. 4 und 5).

8. Kaffeemaschine nach Anspruch 7, dadurch gekennzeichnet, daß der Kanal (44) des Kannendeckels (40) auf seiner der Kanne (17) der Kaffeemaschine abgewand-ten Seite offen ist (Fig. 4).

9. Kaffeemaschine nach Anspruch 6, dadurch gekennzeichnet, daß der Kanal (45) nach oben hin durch eine Decke (66) verschlossen ist, die in die Schnaupenabdeckung (47) ausläuft (Fig. 5).

10. Kaffeemaschine nach Anspruch 1, dadurch gekennzeichnet, daß der Oberteil (50) des Kannendeckels (48) einen Einlaufraum (49) für den aus dem Filter (15) abströmenden Kaffee aufweist, der zur Unterbringung eines ortsveränderlichen Schwimmers (53 bzw. 59) dient, der in seiner einen Endlage einen Durchlaß (52 bzw. 58) des Unterteiles des Kannendeckels (48) verschließt (Fig. 6 und 7).

11. Kaffeemaschine nach Anspruch 10, dadurch gekennzeichnet, daß der Schwimmer (53) aus einem im Einlaufraum (49) befindlichen Oberteil (54) und einem unterhalb des Durchlasses (52) des Kannendeckelunterteiles (51) liegenden Unterteil (55) besteht, die durch einen den Durchlaß (52) durchgreifenden Verbindungssteg (56) miteinander verbunden sind, wobei die Durchmesser von Oberteil (54) und Unterteil (55) des Schwimmers (53) den des Durchlasses (52) überragen (Fig. 6).

12. Kaffeemaschine nach Anspruch 10, dadurch gekennzeichnet, daß der Schwimmer als Schwimmkugel (59) ausgebildet ist (Fig.7).

13. kaffeemaschine nach Anspruch 10 und 12, dadurch gekennzeichnet, daß die Schwimmkugel (59) in einem Käfig (60) untergebracht ist, der durch eine eine Flüssigkeit durchlassende Abdeckung (61) von dem Einlaufraum (49) des Kannendeckels (48) abgetrennt ist.

14. Kaffeemaschine nach Anspruch 13, dadurch gekennzeichnet, daß die Abdeckung (61) des Käfigs (60) aus einem Mittelstück (63) besteht, von dem unter Freilassung von Durchtrittsöffnungen für die Flüssigkeit Stege (62) ausgehen, deren freie Enden an der Begrenzungswand des Einlaufraumes (49) festgelegt sind (Fig. 7 und 8).

## Claims

1. An electrically powered appliance for preparing hot beverages, such as coffee, tea and the like, in particular a coffee machine, having a fresh-water container and a heating facility - like an instantaneous water heater - from which the heated water passes into a rising pipe whose outlet is arranged above a filter which contains the coffee powder in a paper filter or the like and under which a pot with a spout is situated, the top opening of said pot being closed by a pot lid having a passage provided with facilities to reduce heat losses of the heated coffee,
characterised by the combination of the following features:
a) the pot lid (18, 25, 40, 48) consists of a top section and a bottom section (26, 27, 41, 42, 50, 51) which enclose between them a space (64) filled with insulation material (28);
b) the top and bottom sections (26, 27, 41, 42, 50, 51) of the pot lid (18, 25, 40, 48) each have an opening (29, 30, 43, 46, 49, 52, 53, 58) to permit the passage of the coffee flowing out of the filter (15) of the coffee machine (10);
c) an admission barrier (35, 38) is situated in front of and closes off the opening (30, 46, 52, 58) of the bottom section (27, 42, 51) of the pot lid (26, 27, 41, 42, 50, 51);
d) the pot lid (26, 27, 41, 42, 50, 51) has a spout cover (36, 47) closing at least some sections of the opening of the spout (19) of the pot (17).

2. A coffee machine according to claim 1, characterised in that the top section (26) of the pot lid (25) is inclined to the horizontal and has at its lowest central point an opening (29) which is followed by a central opening (30) with a smaller cross section in the bottom section (27), said central opening being provided with an admission barrier designed as a sealing flap (33) (Fig. 2).

3. A coffee machine according to claims 1 and 2, characterised in that the bottom section (27) of the pot lid (25) has a preferably moulded bearing projection (31) carrying a bearing axle (32) for the sealing flap (33) which is designed as a double lever (Fig. 2).

4. A coffee machine according to claim 3, characterised in that the double lever (33) has lever arms (34, 35) of different lengths of which the shorter arm (35) is allocated to the opening (30) of the bottom section (27) of the pot lid (25) (Fig. 2).

5. A coffee machine according to claims 1 and 2, characterised in that the central opening (30) of the bottom section (27) of the pot lid (25) can be closed by a heat-sensitive lever (38) made of memory metal or bimetal (Fig. 3).

6. A coffee machine according to claim 5, characterised in that the heat-sensitive lever (38) engages with its rear bearing end (39) a transverse bore (37) of a bearing projection (31) of the bottom section (27) of the pot lid (25) (Fig. 3).

7. A coffee machine according to claim 1, characterised in that the inlet (43) of the top section (41) of the pot lid (40) is closed on the side facing the pot (17) of the coffee machine (10) by a barrier element (65) of the bottom section (42) and that the inlet (43) precedes a channel (44, 45) arranged transversely to said inlet, the outlet (46) of said channel being covered by a spout cover (47) and lying above the opening of the spout (19) of the pot (17) (Figs. 4 and 5).

8. A coffee machine according to claim 7, characterised in that the channel (44) of the pot lid (40) is open on its side facing away from the pot (17) of the coffee machine (Fig. 4).

9. A coffee machine according to claim 6, characterised in that the channel (45) is closed on the top by a cover (66) which merges with the spout cover (47) (Fig. 5).

10. A coffee machine according to claim 1, characterised in that the top section (50) of the pot lid (48) has an inlet chamber (49) for the coffee flowing out of the filter (15), said chamber serving to accommodate a movable float (53 and 59) which, in its end position, closes a passage (52 and 58) of the bottom section of the pot lid (48) (Figs. 6 and 7).

11. A coffee machine according to claim 10, characterised in that the float (53) consists of a top section (54) located in the inlet chamber (49) and a bottom section (55) situated under the passage (52) of the pot lid bottom section (51), said top and bottom sections being joined to each other by a connecting web (56) penetrating the passage (52), whereby the diameters of the top section (54) and bottom section (55) of the float (53) protrude over that of the passage (52) (Fig. 6).

12. A coffee machine according to claim 10, characterised in that the float is designed as a ball float (59) (Fig. 7).

13. A coffee machine according to claims 10 and 12, characterised in that the ball float (59) is located in a cage (60) which is separated from the inlet chamber (49) of the pot lid (48) by a cover (61) permitting a liquid to flow through it.

14. A coffee machine according to claim 13, characterised in that the cover (61) of the cage (60) consists of a centre piece from which webs (62) emanate, leaving passages free for the liquid, the free ends of said webs being attached to the limiting wall of the inlet chamber (49) (Figs. 7 and 8).

## Revendications

1. Appareil électrique pour la préparation de boissons chaudes, telles que du café, du thé ou analogue, en particulier machine à café, muni d'un récipient d'eau fraîche, d'un dispositif de chauffage - tel qu'un élément chauffant à circulation - d'où l'eau chauffée arrive dans un tube montant, dont la sortie est disposée au-dessus d'un filtre recevant le café moulu dans un sachet filtre ou analogue, et au-dessous duquel est disposée un pot muni d'un bec verseur et dont l'ouverture supérieure obture un couvercle de pot présentant un passage et auquel sont associés des dispositifs réduisant les pertes de chaleur du café chaud, caractérisé par la combinaison des caractéristiques suivantes :
a) le couvercle de pot (18, 25, 40, 48) se compose d'une partie supérieure et d'une partie inférieure (26, 27, 41, 42, 50, 51), entourant entre elles un espace intermédiaire (64) rempli de matériau isolant,
b) la partie supérieure et la partie inférieure (26, 27, 41, 42, 50, 51) du couvercle de pot (18, 25, 40, 48) sont munies chacune d'une ouverture (29, 30, 43, 46, 49, 52, 53, 58) pour le passage du café s'écoulant hors du filtre (15) de la machine à café (10);
c) un obturateur (35, 38) est monté, en amont ou en aval sur l'ouverture (30, 46, 52, 58) de la partie inférieure (27, 42, 51) du couvercle de pot 8 (26, 27, 41, 42, 50, 51);
d) le couvercle de pot (26, 27, 41, 42, 50, 51) comporte un recouvrement de bec verseur (36, 47) recouvrant au moins par zones l'ouverture du bec verseur (19) du pot (17).

2. Machine à café selon la revendication 1, caractérisée en ce que la partie supérieure (26) du couvercle de pot (25) est inclinée par rapport à l'horizontale et comporte, en son emplacement central le plus bas, une ouverture (29), à l'aval de laquelle est disposée une ouverture centrale plus petite (30) de la partie inférieure (27), et à laquelle est associé un obturateur réalisé sous forme de capuchon de fermeture (33) (figure 2).

3. Machine à café selon la revendication 1 ou 2, caractérisée en ce que la partie inférieure (27) du couvercle de pot (25) comporte une partie en saillie de tourillonnement (31), formée de préférence de moulage et portant un axe de tourillonnement (32) pour le capuchon de fermeture (33) réalisé sous forme de levier double (figure 2).

4. Machine à café selon la revendication 3, caractérisée en ce que le levier double (33) comporte des bras de levier (34, 35) de longueurs différentes, et au plus court (35) desquels est associé l'ouverture (30) de la partie inférieure (27) du couvercle de pot (25) (figure 2).

5. Machine à café selon la revendication 1 ou 2, caractérisée en ce que l'ouverture centrale (30) de la partie inférieure (27) du couvercle de pot (25) est susceptible d'être obturé au moyen d'un levier thermosensible (38), réalisé en métal à effet de mémoire ou sous forme bimétallique (figure 3).

6. Machine à café selon la revendication 5, caractérisée en ce que le levier thermosensible (38) s'engage, par son extrémité de tourillonnement arrière (39) dans un alésage transversal (37) d'une partie en saillie de tourillonnement (31) de la partie inférieure (27) du couvercle de pot (25) (figure 3).

7. Machine à café selon la revendication 1, caractérisée en ce que l'entrée (43) de la partie supérieure (41) du couvercle de pot (40) est obturée, sur sa face tournée vers le pot (17) de la machine à café (10), par une zone d'obturation (65) de la partie inférieure (42), et en ce qu'est branché, en aval de l'entrée (43), un canal (44, 45) disposé transversalement par rapport à l'entrée et dont la sortie (46), recouverte par un recouvrement de bec verseur (47), est disposée au-dessus de l'ouverture du bec verseur (19) du pot (17) (figures 4 et 5).

8. Machine à café selon la revendication 7, caractérisée en ce que le canal (44) du couvercle de pot (40) est ouvert du côté opposé au pot (17) de la machine à café (figure 4).

9. Machine à café selon la revendication 6, caractérisée en ce que le canal (45) est obturé vers le haut au moyen d'un couvercle (66), se poursuivant par le recouvrement de bec verseur (47) (figure 5).

10. Machine à café selon la revendication 1, caractérisée en ce que la partie supérieure (50) du couvercle de pot (48) comporte une chambre d'entrée (49) pour le café s'écoulant hors du filtre (15) et qui sert à loger un flotteur (53 ou 59), localement mobile et qui obture dans l'une de ses positions d'extrémité un passage (52 ou 58) de la partie inférieure du couvercle de pot (48) (figures 6 et 7).

11. Machine à café selon la revendication 10, caractérisée en ce que le flotteur (53) se compose d'une partie supérieure (54), se trouvant dans la chambre d'entrée (49) et d'une partie inférieure (55), située au-dessous du passage (52) de la partie inférieure (51) du couvercle de pot, ces parties étant reliées ensemble au moyen d'une nervure de liaison (56) traversant le passage (52), les diamètres de la partie supérieure (54) et de la partie inférieure (55) du flotteur (53) étant supérieurs à celui du passage (52) (figure 6).

12. Machine à café selon la revendication 10, caractérisée en ce que le flotteur (53) est réalisé sous la forme de flotteur sphérique (59) (figure 7).

13. Machine à café selon la revendication 10 et 12, caractérisée en ce que le flotteur sphérique (59) est loge dans une cage (60) isolée de la chambre d'entrée (49) du couvercle de pot (48) au moyen d'un recouvrement (61) laissant passer les liquides.

14. Machine à café selon la revendication 13, caractérisée en ce que le recouvrement (61) de la cage (60) est composé d'une pièce centrale (63), de laquelle partent, en laissant subsister des ouvertures de passage pour le liquide, des nervures (62) dont les extrémités libres sont fixées à la paroi de limitation de la chambre d'entrée (49) (figures 7 et 8).
